# EUROPÄISCHE PATENTANMELDUNG

(11) **EP 1 495 916 A2**
(43) Veröffentlichungstag der Anmeldung: **12.01.2005**
(21) Anmeldenummer: 04015029.4
(22) Anmeldetag: 25.06.2004
(51) Int. Cl.: B60R 16/02

(54) **Vorrichtung zum Wecken eines Steuergerätes**

(30) Priorität: 05.07.2003 DE 10330451
(71) Anmelder: DaimlerChrysler AG, 70567 Stuttgart (DE)
(72) Erfinder: Eckert, Gerhard, 55276 Dienheim (DE); Huber, Walter, 64289 Darmstadt (DE); Nagel, Gerhard, 71116 Gärtringen (DE); Schöner, Hans-Peter, Dr., 64397 Modautal-Brandau (DE)

(57) **Zusammenfassung**

Vorrichtung zum Wecken eines Steuergerätes (1) in einem Verkehrsmittel mit einer Stromversorgungsschaltung (2) für das Steuergerät (1), um dieses von einem Normalbetriebszustand in einen Ruhezustand zu versetzen, und mit einem Weckmittel (3), welches bei dessen Betätigung die Stromversorgung (2) durchschaltet, um das Steuergerät (1) in den Normalbetriebszustand zu versetzen, wobei das Weckmittel (3) in Serie zu einem ersten Kondensator (18) und einem Widerstand (20) zwischen den Stromversorgungsleitungen (21, Masse) geschaltet ist. Zwischen dem ersten Kondensator (18) und dem Widerstand (20) ist ein Mittenabgriff (23) vorgesehen, der mit oder ohne Zwischenschaltung von Bauelementen (22, 27, 28, 29) mit dem Steuereingang (24) eines ersten Transistors (25) verbunden ist, der erste Transistor (25) ist mit oder ohne Zwischenschaltung von Bauelementen (30, 31) mit einem Steuereingang (32) eines zweiten Transistors (33) verbunden, der den Versorgungsstrom (21) für das zu weckende Steuergerät (1) durchschaltet, und vom zweiten Transistor (33) ist eine Verbindungsleitung (35) zum Knoten (36) zwischen Mittenabgriff (23) und Steuereingang (24) des ersten Transistors (25) zurückgeführt.

## Beschreibung

Die Erfindung betrifft eine Vorrichtung zum Wecken eines Steuergerätes in einem Verkehrsmittel mit einer Stromversorgungsschaltung für das Steuergerät, um dieses von einem Ruhezustand in einen Normalbetriebszustand zu versetzen, und mit einem Weckmittel, welches bei dessen Betätigung oder Ansteuerung die Stromversorgung durchschaltet, um das Steuergerät in den Normalbetriebszustand zu versetzen, wobei das Weckmittel in Serie zu einer Impulserzeugerstufe zwischen den Stromversorgungsleitungen, U_{Batt} bzw. Klemme 30 und Masse, geschaltet ist.

In Verkehrsmitteln, insbesondere Kraftfahrzeugen und Flugzeugen, sind Datenbussysteme im Einsatz, durch die viele einzelne Steuergeräte vernetzt sind. Zur Verringerung der Leistungsaufnahme sind sowohl der Datenbus als auch die Steuergeräte ganz oder nur teilweise in bestimmte Zustände versetzbar, in denen Steuergeräte unter voller Leistungsaufnahme im Normalbetriebszustand oder in einem Ruhezustand arbeiten, in dem die Leistungsaufnahme reduziert ist.

Bei Verkehrsmitteln werden derartige vernetzte Systeme, bspw. ein sogenannter CAN-Bus gemäß ISO 11519 bzw. ISO 11898 eingesetzt, um Motorfunktionen oder Komfortfunktionen im FahrzeugInnenraum zu steuern. In den letzten Jahren ist eine weitere Spezialisierung bei diesen Datenbussystemen erfolgt, so dass auch weitere Datenbusse für brake-by-wire-Systeme oder für die Telekommunikation, wie z. B. D2B- oder MOST-Datenbusse, zum Einsatz kommen. Durch den hohen Grad der Vernetzung besteht nun das Problem, dass das Bordnetz selbst dann belastet wird, wenn das Verkehrsmittel abgestellt ist und eigentlich keine oder nur wenige Steuerungsfunktionen erforderlich sind. Um die Leistungsaufnahme im Ruhezustand zu verringern, werden die Steuergeräte nach einer bestimmten Zeit abgeschaltet, wobei aber erforderlich ist, dass das System beispielsweise ein Signal von einem Transponder zum Entriegeln einer Tür oder dgl. empfangen kann. Dazu müssen die einzelnen Steuergeräte durch den Transponder oder auch andere Bedienschalter bzw. Signale aus dem Ruhezustand weckbar sein.

Die DE 197 15 880 C1 offenbart ein System mit datenbusvernetzten Steuergeräten. Ein einzelnes Steuergerät ist als Master-Steuergerät vorgesehen und ist mit einer Standby-Betriebsfunktion mit Weckbereitschaft ausgestattet und ständig aktiv. Im Ruhezustand des Kraftfahrzeugs befindet sich das Master-Steuergerät in einem Standby-Zustand, während die übrigen Steuergeräte abgeschaltet sind. Erhält das Master-Steuergerät ein Wecksignal, so weckt es über eine Steuerleitung die übrigen Steuergeräte, so dass diese wieder mit Strom versorgt werden und in ihrer Normalfunktion einsatzfähig sind.

Die EP 0 829 786 A2 betrifft ein Verfahren zur Steuerung der elektrischen Versorgung mehrerer miteinander auf einer Datenleitung kommunizierender Steuergeräte, bei dem nach Aussenden eines ersten definierten Datenbefehls mindestens eines der Steuergeräte von einem Ruhestrom-Verbrauchszustand in einen Normal-Verbrauchszustand versetzt wird.

Die DE 199 41 699 A1 offenbart eine Halbleitersicherung für elektrische Verbraucher, bei der ein Halbleiterschalter zwischen der als Strom- bzw. Spannungsquelle dienenden Batterie und dem Verbraucher liegt. Parallel zum Halbleiterschalter ist ein kurzschlussfester Bypass mit integrierter Wakeup-Schaltung vorgesehen, der mit dem Halbleiterschalter zusammenwirkt.

Die WO 98/20609 offenbart einen digitalen Wakeup-Timer für eine elektrisches Gerät, bspw. ein Telefon.

In der DE 196 11 945 C1 ist ein System offenbart, dessen Steuergeräte in einem Betriebszustand verharren, aus dem sie sehr schnell wieder in einen Normalbetriebszustand versetzbar sind. Dazu ist vor jedes Steuergerät und vor dessen Busprotokoll-Modul eine Halbleiterschaltung geschaltet, die aus einem übergeordneten Spannungspotential versorgbar ist und mittels eines Steuereingangs aus einem Ruhe-/Sleep-Modus geweckt werden kann. Der Weckvorgang erfolgt über ein Steuersignal, in dessen Folge die genannte Halbleiterschaltung die Stromversorgung durchschaltet.

Bei diesen bekannten Systemen muss mindestens ein Steuergerät immer angeschaltet bleiben, das dann bei Bedarf die übrigen Steuergeräte wecken kann. Bei einem Ruhezustand, bei dem auch der Spannungsregler des letzten Steuergerätes abgeschaltet wird, besteht das Problem, dass die Steuergeräte nicht mehr geweckt werden können, da die Schalter zum Wecken bzw. die Logikschaltungen, die zum Durchschalten der Betriebsspannung für das Steuergerät erforderlich sind, nicht mit Strom versorgt sind und daher auch nicht funktionsfähig sind. Denn ein stromloser Bedienschalter kann die Stromversorgung für das Steuergerät nicht durchschalten. Beispielsweise beim Wecken durch einen Transponder muss auch eine Logikschaltung mit Strom versorgt sein. Der Strom ist aber im Ruhezustand nicht vorhanden, da die Spannungsversorgung abgeschaltet ist und die Schalter bzw. vorhandenen Logikschaltungen über die Betriebsspannung des jeweiligen Steuergerätes mitversorgt werden.

Es ist Aufgabe der vorliegenden Erfindung, eine Vorrichtung zum Wecken eines Steuergerätes derart weiterzubilden, dass einzelne Steuergeräte aus einem Ruhezustand, bei dem die Spannungsversorgung der Steuergeräte abgeschaltet ist, wieder in den Normalbetriebszustand versetzt werden können, ohne dass ein Master-Steuergerät betriebsbereit bleiben muss, um die elektrische Energie für den Weckvorgang bereitzustellen.

Diese Aufgabe wird erfindungsgemäß durch die Merkmale des unabhängigen Anspruchs 1 gelöst. Danach weist die Impulserzeugerstufe ein Mittenabgriff auf, der mit oder ohne Zwischenschaltung von Bauelementen mit dem Steuereingang eines ersten Transistors verbunden ist, der erste Transistor ist mit oder ohne Zwischenschaltung von Bauelementen mit einem Steuereingang eines zweiten Transistors verbunden, der den Versorgungsstrom für das zu weckende Steuergerät durchschaltet. Vom zweiten Transistor ist eine Verbindungsleitung zum Knoten im Leiter zwischen Mittenabgriff und Steuereingang des ersten Transistors zur Selbsthaltung des Durchschaltzustandes des zweiten Transistors zurückgeführt. Bevorzugt weist die Impulserzeugerstufe einen ersten Kondensator und einen dazu in Serie geschalteten Widerstand auf.

Erfindungsgemäß hat das Weckmittel, insbesondere ein Bedienschalter/-taster oder ein von einer elektronischen Schaltung ansteuerbarer Schalter, eine Impulserzeugerstufe, aus der die Initialimpuls bzw. die Energie für den Weckvorgang und für die logische Überprüfung der Weckanfrage bspw. durch Umlanden eines Kondensators stammt. Dazu kann die Impulserzeugerstufe einen Kondensator aufweisen, aus dem die Energie für den Weckimpuls stammt. Infolgedessen kann das dem Weckmittel zugeordnete Steuergerät abgeschaltet werden, da es nicht zur Energieversorgung für das Weckmittel in Betrieb bleiben muss.

Erfindungsgemäß ist erkannt worden, dass ein Steuergerät über eine Transistorstufe eingeschalten werden kann, wobei bei entsprechender Auslegung mit verlustarmen Bauelementen nur die Ansteuerenergie am Steuereingang der Transistorstufe zur Verfügung gestellt werden muss. Die erfindungsgemäße Schaltung stellt eine besonders verlustarme Vorrichtung zum Wecken des Steuergeräts bereit, da lediglich ein kurzer Einschaltimpuls über das Umladen eines ersten Kondensators bereitgestellt wird, so dass ein erster Transistor der Transistorstufe kurz eingeschalten wird und den zweiten Leistungstransistor durchschaltet, um das Steuergerät mit Strom zu versorgen. Der entscheidende Vorteil besteht nun darin, dass vom zweiten Transistor eine Verbindungsleitung zum Leiter zwischen Mittenabgriff und Steuereingang des ersten Transistors zurückgeführt ist. Ist also der zweite Transistor einmal durchgeschaltet, so wird das Steuergerät über diesen mit Strom versorgt, wobei an den energieführenden Klemmen des zweiten Transistors die positive Versorgungsspannung abzüglich des Spannungsabfalls im Transistor-Halbleiter anliegt. Diese positive Versorgungsspannung wird über die Verbindungsleitung vor den Steuereingang des ersten Transistors rückgekoppelt, wodurch der Steuereingang des ersten Transistors auf positivem Potential liegt und damit den zweiten Transistor weiterhin im leitenden Zustand hält. Als Ergebnis kann der zweite Transistor mittels eines minimalen Einschaltimpulses durch den ersten Kondensator eingeschalten werden und der zweite Transistor verbleibt dann so lange im leitenden Zustand, bis der Steuereingang des ersten Transistors auf Masse gelegt wird.

Die erfindungsgemäße Schaltung ermöglicht ein Wecken eines Steuergeräts mit minimalem Energieverbrauch im nA-Bereich. Für das weitere Durchschalten des Steuergerätes wird dann die notwendige Ansteuerenergie für den ersten Transistor aus der Stromversorgungsleitung des Steuergerätes beim zweiten Transistor entnommen. Wenn der Bedienschalter/Taster geschlossen wird und die Weckschaltung "aktiv" ist, noch bevor der zweite Transistor leitend wird, fließen einige mA Strom aus der Stromversorgungseinheit in die Schaltung. Wesentlich ist, dass der geringe Stromverbrauch im Ruhezustand anliegt, wenn kein Taster betätigt ist. Dieser Ruhestrom ist nur noch durch die Leckströme der beiden Transistoren und durch die passive Selbsthaltung bedingt.

Parallel zum ersten Kondensator ist ein Widerstand vorgesehen, über den sich nach dem Einschaltevorgang der erste Kondensator entladen kann. Infolgedessen ist die Vorrichtung zum Wecken des Steuergeräts nach dem Umladevorgang des ersten Kondensators sofort wieder einsatzbereit. Der Energieverbrauch der Vorrichtung zum Wecken ergibt sich aus der Umladeenergie des ersten Kondensators und dem parallelen Leckstrom über den Entladewiderstand parallel zum ersten Kondensator, der sich vor allem dann ergibt, wenn die Bedienschalter sich in geschlossener Stellung befinden. Der Energieverlust über den zum ersten Kondensator parallelen Widerstand kann dadurch minimiert werden, dass dieser Widerstand so hochohmig wie möglich verwendet wird.

Zwischen dem ersten Kondensator und dem dazu in Serie zwischen den Stromversorgungsleitungen geschalteten Widerstand ist ein Mittenabgriff vorgesehen. Zwischen diesen Mittenabgriff und den Steuereingang des ersten Transistors ist bevorzugt ein zweiter Kondensator geschaltet. Dieser zweite Kondensator wirkt als Gleichstromsperre und verhindert, dass außer dem kurzen Einschaltimpuls durch den ersten Kondensator ein Gleichstrom zum Steuereingang des Transistors weiterfließt. Dadurch wird ein besonders niedrigerer Energieverbrauch bei der Vorrichtung zum Wecken des Steuergeräts ermöglicht. Hier könnte alternativ auch eine spezielle Diode eingesetzt werden. Zwischen diesem zweiten Kondensator und dem Steuereingang ist bevorzugt die Verbindungsleitung vom zweiten Transistor zurückgeführt und zusätzlich ist ein Abschalteausgang des Steuergeräts elektrisch leitend angekoppelt, um den Steuereingang des ersten Transistors abzuschalten. Dabei steuert das Steuergerät den Abschaltpegel unter die Schaltschwelle des Steuereingangs am ersten Transistor, wobei das Spannungspotential beispielsweise der Nullpegel sein kann. Zwischen dem zweiten Kondensator und dem Steuereingang kann auch ein Filter, beispielsweise ein Tiefpass, angeordnet sein. Dieser verhindert, dass EMV-Störungen (Elektromagnetische Verträglichkeit) in die Ansteuerleitung des ersten Transistors eingekoppelt werden. Ferner verzögert der Tiefpass auch die ansteigende Flanke des Einschaltimpulses am ersten Kondensator. Zwischen dem ersten Transistor und dem Steuereingang des zweiten Transistors ist bevorzugt ein Widerstand eingekoppelt, der zum aus zwei Widerständen bestehenden Spannungsteiler gehört, der das Potential am Steuereingang des zweiten Transistors auf den notwendigen Arbeitspunkt legen.

Mit der vorliegenden Erfindung können insbesondere Steuergeräte im Fahrzeuginnenraum, beispielsweise Komfort-Steuergeräte für Sitz-, Spiegel- und/oder Telematik-Funktionen schnell und lokal geweckt werden, ohne dass dabei der gesamte Datenbus hochgefahren werden muss. Dies ist möglich, weil die Vorrichtung zum Wecken dieser Steuergeräte einen extrem niedrigen Energieaufwand benötigt, was bei den herkömmlichen Schaltungen nicht möglich war, da diese um eine Zehnerpotenz bzgl. des Stromverbrauchs höher lagen, da die Ansteuerleistung auch nach dem Durchschalten des zweiten Transistors erforderlich war.

Erfindungsgemäß wird als Bedienschalter ein Taster eingesetzt, der die Spannungsversorgung nur sehr kurzzeitig an den ersten Kondensator legt, um diesen aufzuladen. Da bei einem Kondensator die Spannung energietragende Größe ist, kann die Spannung beim Kondensator nicht springen. Infolgedessen wird der Spannungsimpuls an dem Kondensator in Serie liegenden Widerstand anliegen, der wiederum mit dem Steuereingang des ersten Transistors verbunden ist. Dieser sehr kurze Spannungsimpuls reicht bei der erfindungsgemäßen Vorrichtung zum Wecken aus, um den zweiten Leistungstransistor durchzuschalten. Werden Taster als Bedienschalter verwendet, wird im Ruhezustand kein Strom fließen und durch den zweiten Kondensator vor dem ersten Transistor kommt es selbst bei einem defekten Bedienschalter nicht zu hohen Verlustströmen, da dieser zweite Kondensator als Gleichstromsperre fungiert.

Für Steuergeräte im Komfortbereich ist es oft nicht erforderlich, bei ausgeschalteter Zündung des Verkehrsmittels auf Dätenbusinformationen zu warten. Die Weckaufrufe, die durch Betätigen der Bedienschalter ausgelöst werden, erzeugen über die erfindungsgemäße Vorrichtung einen kurzen Spannungsimpuls, wodurch das Steuergerät mit Strom versorgt wird. Durch Betätigen eines Bedienelementes wird der erste Kondensator aufgeladen, der als verlustarmer Speicherkondensator ausgeführt ist. Dieser im ersten Kondensator erzeugte Spannungsimpuls steuert über den ersten Transistor eine Selbsthalteschaltung an, die durch die zurückgeführte Verbindungsleitung vorgesehen ist, und die beiden Transistoren werden bis zum Eintreffen des Ausschaltsignales vom Steuergerät im leitenden Zustand verbleiben. Im Fehlerfall, beispielsweise beim Hängen des Bedienschalters, kann das Steuergerät spannungsfrei geschaltet werden. Der Ruhestrombedarf der Schaltung liegt im Bereich von wenigen Nanoampere.

Die erfindungsgemäße Vorrichtung ist bevorzugt zwischen die Klemme 30 in einem Kraftfahrzeug, d. h. das Zündung-Ein-Signal oder die Batteriespannung U_{Bat} und dem Nullpotential am Fahrzeugchassis geschaltet. Die elektrische Schaltung der Vorrichtung zum Wecken eines Steuergeräts ist derart ausgeführt, dass bei einem Defekt eines Bedienschalters ein möglichst geringer Gleichstrom von der Klemme 30 fließt. Dazu sind Kondensatoren als Gleichstromsperren in der Schaltung vorgesehen, die zwar den kurzen Einschaltimpuls durchlassen, jedoch einen länger anhaltenden Gleichstromfluss von der Klemme 30 zur Masse blockieren. Im Gegensatz zu bestehenden Systemen, bei denen die Steuergeräte auch bei ausgeschalteter Zündung in einer Grundbereitschaft zum Empfangen von Bussignalen verbleiben, kann bei der erfindungsgemäßen Vorrichtung das Steuergerät abgeschalten sein und bei Bedarf lokal geweckt werden. Die erfindungsgemäße Vorrichtung besteht aus einer Impulsformerstufe, bestehend aus dem ersten Kondensator und dem dazu in Serie geschalteten Widerstand und aus einer Ansteuerstufe mit Selbsthalteschaltung, bestehend aus den beiden Transistoren und der Rückkopplung über die Verbindungsleitung.

Das Weckmittel ist bevorzugt als sogenannte Wired-Or-Schaltung ausgeführt, bei dem ein oder mehrere dem zu weckenden Steuergerät zugeordnete und zueinander parallel geschaltete Bedienschalter vorgesehen sind. Diese Wired-Or-Schaltung hat den Vorteil, dass das Steuergerät durch die Betätigung eines der parallel geschalteten Bedienschalter geweckt wird, wobei über eine vom Bedienschalter zum Steuergerät geführte Leitung dann noch erkannt werden kann, welcher spezielle Bedienschalter betätigt wurde.

Die über die Wired-Or-Schaltung zusammengeschalteten Bedienschalter sind zueinander parallel geschaltet und in der zur Masse führenden Leitung ist jeweils eine Diode eingeschaltet. Zwischen dem Bedienschalter und der Diode ist jeweils ein Potentialabgriff vorgesehen, der zum Steuergerät geführt ist. Aufgrund der vom Potentialabgriff zum Steuergerät verlaufenden Verbindungsleitung kann im Steuergerät erkannt werden, welcher Bedienschalter betätigt wurde. Grundsätzlich weckt aber jede Betätigung eines beliebigen Bedienschalters das Steuergerät. Die Vorrichtung zum Wecken der Steuergeräte ist jeweils einem einzelnen Steuergerät zugeordnet. An dem Datenbus innerhalb des Verkehrsmittels sind bis zu 60 Steuergeräte eingesetzt, die auf unterschiedliche Weise geweckt werden können. Mit der erfindungsgemäßen Vorrichtung zum Wecken können bevorzugt Komfort-Steuergeräte über die zugeordneten Bedienschalter geweckt werden, ohne dass der gesamte Datenbus hochgefahren werden muss. Für das Wecken des Steuergerätes ist es unerheblich, welches Bedienelement aus der Gruppe der dem Steuergerät zugeordneten Bedienschalter aktiviert wird.

Wird ein Bedienschalter betätigt, so wird die Batteriespannung auf den ersten Kondensator durchgeschaltet, wodurch die Transistorstufe die Versorgungsspannung an das Steuergerät schaltet. Die zusätzliche Leitung vom Bedienschalter zum Steuergerät gibt dann an, welcher Bedienschalter betätigt wurde. Auf diese Weise kann dann das Steuergerät nach dem Hochfahren die dem Bedienschalter zugeordnete Funktion, beispielsweise Verstellen des Sitzes, ausführen.

Bei einer anderen Weiterbildung der Erfindung ist das Weckmittel in zwei Gruppen von Bedienschaltern aufgeteilt, die beide das gleiche Steuergerät wecken, wobei die Bedienschalter einer Gruppe jeweils elektrisch leitend mit einem weiteren Steuergerät verbunden sind. Andererseits kann auch vorgesehen sein, dass die Betätigung eines Bedienschalters mehrere Steuergeräte weckt, wobei die Funktionen der beiden Gruppen von Bedienschaltern einem ersten Steuergerät zugeführt sind und dann über den hochgefahrenen Datenbus später die auszuführende Funktion der zweiten Gruppe an ein weiteres Steuergerät übermittelt wird, das bei der Betätigung eines Bedienschalters gleich mit dem ersten Steuergerät zusammen geweckt wurde. Die Bedienelemente der ersten Gruppe lösen dann beispielsweise die Funktion A aus, die in dem ersten Steuergerät programmiert ist. Die Bedienelemente der zweiten Gruppe lösen dann die Funktion B aus, die im zweiten Steuergerät programmiert und gesteuert sind. Bei der Weiterbildung werden dann die Signale der Bedienschalter beider Gruppen im ersten Steuergerät verarbeitet. Trotzdem weckt jede Betätigung eines Bedienschalters das erste und das zweite Steuergerät gleichzeitig. Das erste Steuergerät übermittelt dann über den Datenbus die berechneten Daten an das zweite Steuergerät, welches dann die übermittelten Signale auswertet.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. Es zeigen jeweils in schematischer Ansicht:
- Fig. 1: eine Darstellung der Vorrichtung zum Wecken eines Steuergerätes gemäß der vorliegenden Erfindung und
- Fig. 2: einen Schaltplan der erfindungsgemäßen Vorrichtung.

Die Vorrichtung zum Wecken eines Steuergerätes 1 in einem Verkehrsmittel ist mit einer Stromversorgungsschaltung 2 ausgestattet, durch die das Steuergerät 1 von einem Normalbetriebszustand in einen Ruhezustand versetzt werden kann. Ein Weckmittel 3 weist mehrere zueinander parallel geschaltete Bedienschalter 4 - 6 auf, welche bei deren Betätigung die Stromversorgungsschaltung 2 des Steuergeräts 1 durchschalten. Die Vorrichtung weist eine Ansteuerschaltung 7 auf, die über eine Verbindungsleitung 8 mit den Bedienschaltern 4 - 6 elektrisch leitend verbunden ist. Die Ansteuerschaltung 7 steuert die Stromversorgungsschaltung 2 an, so dass das Steuergerät 1 im Normalbetriebszustand mit Energie von den Stromversorgungsleitungen, beispielsweise über Klemme 30 und die Masseleitung, versorgt ist.

Die parallel geschalteten Bedienschalter 4 - 6 weisen auf ihrer, der Ansteuerschaltung 7 zugewandten Seite in der Verbindungsleitung 8 jeweils eine Diode 9 - 11 auf. Zusätzlich ist von jeder Verbindungsleitung 8 der einzelnen Bedienschalter 4 - 6 eine Informationsleitung 12 - 14 zum Mikrorechner 15 des Steuergeräts 1 elektrisch leitend verbunden. Der Mikrorechner 15 erhält dadurch jeweils eine Information, welcher Bedienschalter 4 - 6 betätigt worden ist, so dass der Mikrorechner 15 das entsprechende Programm ausführen kann. Die Informationsleitungen 12 - 14 können jeweils das zwischen der Diode 9 - 11 und dem zugehörenden Bedienschalter 4 - 6 liegende Potential zum Steuergerät 1 übertragen, wo der entstehende Spannungswert analog-digital gewandelt wird, so dass im Mikrorechner 15 aufgrund des anliegenden Potentials festgestellt werden kann, ob ein Bedienschalter 4 - 6 betätigt wurde. Die Dioden 9 - 11 haben dabei jeweils die Funktion, dass bei offenem Bedienschalter 4 - 6 kein Strom von der Ansteuerschaltung 7 über die Verbindungsleitung 8 und die Informationsleitungen 12 - 14 zum Mikrorechner 15 fließt.

Die Vorrichtung zum Wecken eines Steuergerätes 1, insbesondere eines Komfort-Steuergerätes, funktioniert folgendermaßen: Ist beispielsweise ein Kraftfahrzeug mehrere Tage lang abgestellt, so befinden sich sämtliche Systeme im Ruhezustand. Wird die Kraftfahrzeugtür geöffnet, so wird über einen zugeordneten Transistorschalter das Türsteuergerät geweckt, und dieses fährt das gesamte Netzwerk hoch.

Wird nun nach längerer Nichtbenutzung der Datenbus mit seinen Steuergeräten wieder in den Ruhezustand versetzt, können später einzelne Komfortsteuergeräte mittels der erfindungsgemäßen Vorrichtung auch einzeln lokal über einen zugeordneten Bedienschalter geweckt werden. Wenn das Steuergerät 1 als Sitzsteuergerät ausgeführt ist, führt das Betätigen des Bedienschalters 4 dazu, dass das Steuergerät 1 aus dem Ruhezustand lokal geweckt wird. Nachdem der Mikrorechner 15 hochgefahren ist, kann über die zugeordnete Informationsleitung 13 festgestellt werden, dass beispielweise eine Sitzverstelltaste zur horizontalen Verlagerung des Sitzes betätigt wurde. Der Mikrorechner 15 führt deswegen die Funktion zur horizontalen Verlagerung des Fahrzeugsitzes sofort aus, ohne dass das gesamte Datenbussystem mit allen daran hängenden Steuergeräten geweckt werden muss. Nach einer gewissen Zeitdauer erzeugt das Steuergerät 1 durch seinen Mikrorechner 15 ein Abschaltsignal, wodurch das Steuergerät 1 sich selbst in den Ruhezustand versetzt. Die Bedienschalter 4 - 6 können dann wieder neu betätigt werden, wodurch das Sitzsteuergerät seine Funktion aufnimmt. Die Bedienschalter 4 - 6 können auch durch Relais oder fernbedienbare Transistorschalter ersetzt werden, so dass auch das Öffnen der Fahrzeugtür oder das Öffnen des Kofferraums oder der Motorhaube über eine derartige Vorrichtung zum Wecken eines Steuergeräts und die zugeordneten Aktoren ausgeführt werden kann.

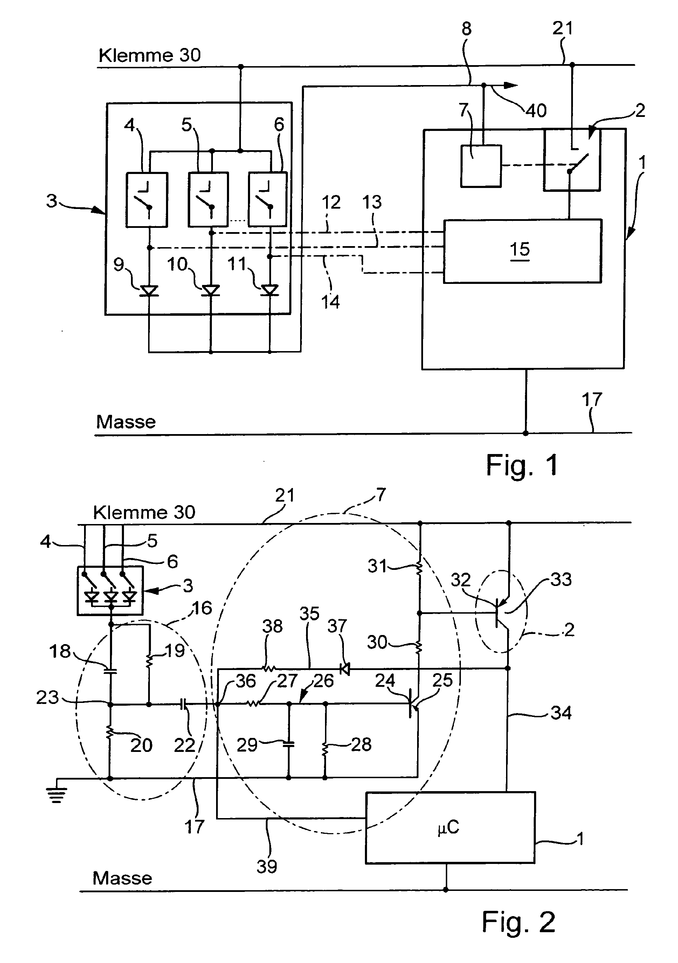

In Figur 1 kann über die Leitung 40 eine Ansteuerschaltung 7 eines weiteren Steuergeräts angekoppelt sein, so dass durch die Bedienung eines der Schalter 4, 5, 6 neben dem Steuergerät 1 noch ein oder mehrere weitere Steuergeräte gleichzeitig geweckt werden. Über die Leitungen 12 - 14 können dann entweder sämtliche Funktionen im Steuergerät 1 vorverarbeitet werden und über einen nicht dargestellten Datenbus zum weiteren Steuergerät übertragen werden oder es sind separate Informationsleitungen zu den weiteren Steuergeräten vorgesehen. Auf diese Weise können sämtliche, durch eine Bedienfunktion betroffenen Steuergeräte gleichzeitig über die Informationsleitungen 12 - 14 bzw. über die Verbindungsleitung 8 oder 40 geweckt werden, ohne dass dazu eine Übertragung über den Datenbus erfolgen muss. Werden lediglich Einzelkomfortfunktionen angefordert, beispielsweise Telefonieren über ein Mobiltelefon, während das Fahrzeug sich im Ruhezustand befindet, werden lediglich die betroffenen Steuergeräte 1 usw. geweckt.

Die Vorrichtung zum Wecken eines Steuergeräts gemäß der vorliegenden Erfindung ermöglicht das Einschalten des zweiten Leistungstransistors, der das Steuergerät an die Batteriespannung (Klemme 30) schaltet. Die Bedienschalter 4 - 6 sind bevorzugt als Taster ausgeführt und mit der Ansteuerschaltung 7 elektrisch leitend verbunden, um das Steuergerät 1 zu wecken. Die Informationsleitungen 12 - 14 dienen dazu, den betätigten Bedienschalter 4, 5, 6 zu identifizieren, damit die gewünschte Funktion vom Steuergerät 1 ausgeführt werden kann.

In Figur 2 ist die Vorrichtung zum Wecken des Steuergeräts 1 detaillierter dargestellt. Die Bedienschalter 4, 5 und 6 des Weckmittels 3 sind mit einer Impulsformerschaltung 16 und einer Ansteuerschaltung 7 mit Selbsterhaltung elektrisch leitend verbunden.

Die Impulsformerstufe 16 weist einen ersten Kondensator 18 auf, der sich über den parallel geschalteten Widerstand 19 entladen kann. Zwischen der Stromversorgungsleitung 21 mit positivem Potential, welche beispielsweise der Klemme-30-Spannung mit dem Zündung-Ein-Signal entspricht und der Stromversorgungsleitung 17 mit dem Massepotential, ist in Serie zum Weckmittel 3 und dem ersten Kondensator 18 ein weiterer Widerstand 20 geschaltet. Als Gleichstromsperre ist ein zweiter Kondensator 22 ausgangsseitig an der Impulsformerstufe 16 vorgesehen. Die Ansteuerschaltung 7 weist zwischen dem ersten Kondensator 18 und dem weiteren Widerstand 20 liegenden Knotenpunkt 23 und dem Steuereingang 24 eines ersten Transistors 25 als Filter einen Tiefpass 26 auf, der aus dem Widerstand 27 und einem Kondensator 29 besteht. Der Tiefpass 26 hat die Aufgabe hochfrequente Störsignale am Eingang des ersten Transistors 25 herauszufiltern. Es ist in der Schaltung noch ein Widerstand 28 vorgesehen, der zum sicheren Abschalten des Transistors 25 dient, wenn an der Leitung 39 ein Abschaltsignal, bspw. ein LOW-Signal, anliegt.

Der erste Transistor 25 steuert über einen zwischengeschalteten Spannungsteiler 30, 31 den Steuereingang 32 eines zweiten Transistors 33 an. Dieser zweite Transistor 33 kann das positive Potential der Stromversorgungsleitung 21 über die Stromversorgungsleitung 34 an das Steuergerät 1 durchschalten, so dass dieses in den Normalbetriebszustand schalten kann. Innerhalb des Steuergeräts 1 oder vor der Spannungsversorgungsleitung 21 kann ein nicht dargestellter Spannungsregler vorgesehen sein, um die Spannung entsprechend für das Steuergerät bzw. die einzelnen Bauelemente bereitzustellen. Eine Verbindungsleitung 35 koppelt das Spannungspotential des zweiten Transistors 33 an einen Knoten 36 zwischen dem Mittenabgriff 23 und der Steuerklemme 24 des ersten Transistors 25 zurück. Eine Diode 37 verhindert einen Stromfluss über die Verbindungsleitung 35 in die falsche Richtung und ein Widerstand 38 reduziert den Stromfluss.

Durch die Verbindungsleitung 35 entsteht eine Selbsthalteschaltung, denn sobald der zweite Transistor 33 eingeschaltet ist, wird über die Verbindungsleitung 35 an die Steuerklemme 24 des ersten Transistors 25 ein positives Potential gelegt, wodurch der erste Transistor 25 und damit auch der zweite Transistor 33 selbsttätig durchgeschaltet bleiben. An den Knoten 36 ist zusätzlich noch die Abschaltleitung 39 vom Mikrorechner 1 angekoppelt, wodurch der Mikrorechner 1 die Steuerklemme 24 des ersten Transistors 25 mit einem Abschaltpotential versorgt, wodurch der zweite Transistor 33 abgeschaltet wird. Die Abschaltleitung 39 wird angesteuert, wenn das Steuergerät 1 sich selbsttätig in den Ruhezustand versetzt.

Die in Figur 2 dargestellte Schaltung funktioniert folgendermaßen: Bei Betätigen des Bedienschalters 4 wird der Kondensator 18 an positives Potential gelegt und beginnt sich aufzuladen. Am Mittenabgriff 23 liegt schlagartig dadurch positives Potential der positiven Versorgungsspannung 21 an, die in der folgenden Zeit durch das Aufladen des Kondensators 18 abnimmt. Über den als Gleichstromsperre fungierenden Kondensator 22 wird dieses impulsförmige Einschaltpotential an den Steuereingang 24 des ersten Transistors 25 gelegt. Dadurch schaltet der erste Transistor 25 durch und legt damit den Steuereingang des zweiten Transistors 33 auf positives Potential, so dass das Steuergerät mit positiver Versorgungsspannung aus der Stromversorgungsleitung 21 versorgt wird.

Der Widerstand 19 führt dazu, dass nach dem Weckvorgang der Kondensator 18 wieder entladen wird, wenn der Bedienschalter 4 danach geöffnet ist. Der Kondensator 22 dient dazu, bei einem defekten Bedienschalter 4 - 6 keinen Stromfluss zum Transistor 25 oder in das Steuergerät 1 zuzulassen. Der Tiefpass 26 kann neben EMV-Störungen auch Signalschwankungen ausfiltern, die durch ein Prellen des Bedienschalters 4 entstehen. Als erster Transistor 25 kann ein Bipolartransistor vorgesehen sein. Andererseits lassen sich die Transistorendstufen mit den Transistoren 25 und 33 auch in MOSFET-Technik umsetzen. Durch die Rückkopplungsleitung 35 entsteht die schon beschriebene Selbsthalteschaltung. Dadurch bleibt der Transistor 33 in einem leitenden Zustand, bis der Steuereingang des Transistors 25 auf ein Abschaltpotential durch die Abschaltleitung 39 gelegt wird.

Ein Prellen oder ein erneutes Betätigen eines Bedienschalters ändert den Zustand der Weckschaltung bzw. den Schaltzustand des Transistors 33 nicht. Das nun über den Transistor 33 am Versorgungspotential liegende Steuergerät 1 führt nun die erforderlichen Funktionen aus, wartet eine gewisse Zeit und schaltet sich danach wieder in den Ruhezustand. Dazu ist auf dem Steuergerät 1 eine Software-Funktion vorgesehen, die nach der Erledigung der durch den Bedienschalter 4 angeforderten Funktion nach einer Verweilzeit ein Abschaltsignal mit Nullpegel auf die Leitung 39 legt, wodurch das Steuergerät abgeschaltet wird. Der Widerstand 28 legt den Steuereingang des ersten Transistors 25 an die Masseleitung und gewährleistet das Sperren des ersten und zweiten Transistors 25, 33 bis zum nächsten Wecken des Steuergeräts 1 durch Betätigung eines der Schalter 4 - 6.

## Patentansprüche

1. Vorrichtung zum Wecken eines Steuergerätes (1) in einem Verkehrsmittel mit einer Stromversorgungsschaltung (2, 17, 21) für das Steuergerät (1), um dieses von einem Ruhezustand in einen Normalbetriebszustand zu versetzen, und mit einem Weckmittel (3), welches bei dessen Betätigung oder Ansteuerung die Stromversorgung (2, 21) durchschaltet, um das Steuergerät (1) in den Normalbetriebszustand zu versetzen, wobei das Weckmittel (3) in Serie zu einer Impulserzeugerstufe (18, 20) zwischen den Stromversorgungsleitungen (21, Masse) geschaltet ist,
**dadurch gekennzeichnet,**
**dass** die Impulserzeugerstufe (18, 20) ein Mittenabgriff (23) aufweist, der mit oder ohne Zwischenschaltung von Bauelementen (22, 27, 28, 29) mit dem Steuereingang (24) eines ersten Transistors (25) verbunden ist, dass der erste Transistor (25) mit oder ohne Zwischenschaltung von Bauelementen (30, 31) mit einem Steuereingang (32) eines zweiten Transistors (33) verbunden ist, der den Versorgungsstrom (21) für das zu weckende Steuergerät (1) durchschaltet, und dass vom zweiten Transistor (33) eine Verbindungsleitung (35) zum Knoten (36) im Leiter zwischen Mittenabgriff (23) und Steuereingang (24) des ersten Transistors (25) zur Selbsthaltung des Durchschaltzustandes des zweiten Transistors (33) zurückgeführt ist.

2. Vorrichtung nach Anspruch 1, **dadurch gekennzeichnet, dass** die Impulserzeugerstufe (18, 20) einen ersten Kondensator (18) und einen dazu in Serie geschalteten Widerstand (20) aufweist.

3. Vorrichtung nach Anspruch 1, **dadurch gekennzeichnet, dass** in den Leiter zwischen Mittenabgriff (23) und Steuereingang (24) des ersten Transistors (25) ein zweiter Kondenstor (22) eingeschaltet ist.

4. Vorrichtung nach einem der Ansprüche 1 oder 2, **dadurch gekennzeichnet, dass** parallel zum ersten Kondensator (18) ein Widerstand (19) vorgesehen ist, über den sich der erste Kondensator (18) entladen kann.

5. Vorrichtung nach Anspruch 1, **dadurch gekennzeichnet, dass** das Weckmittel (3) ein oder mehrere dem zu weckenden Steuergerät (1) zugeordnete und parallel geschaltete Bedienschalter (4 - 6) aufweist.

6. Vorrichtung nach Anspruch 4, **dadurch gekennzeichnet, dass** die parallel geschalteten Bedienschalter (4 - 6) in einer Wired-Or-Schaltung zusammengeschaltet sind, so dass die Betätigung jedes der Bedienschalter (4 - 6) zum Weckvorgang des Steuergerätes (1) führt.

7. Vorrichtung nach Anspruch 4, **dadurch gekennzeichnet, dass** die parallel geschalteten Bedienschalter (4 - 6) einerseits über eine Diode (9 - 11) jeweils mit der Masseleitung des Verkehrsmittels und andererseits jeweils mit dem ersten Kondensator (18) verbunden sind.

8. Vorrichtung nach Anspruch 1, **dadurch gekennzeichnet, dass** das Weckmittel (3) zwei Gruppen von Bedienschaltern (4 - 5; 6) aufweist, die beide das gleiche Steuergerät (1) wecken, wobei die Bedienschalter (4, 5 bzw. 6) einer Gruppe jeweils elektrisch leitend mit einem weiteren Steuergerät (40) verbunden sind.
